(19)

Europäisches
Patentamt
European
Patent Office
Office européen
des brevets

(11) **EP 4 354 147 A1**

(12) **EUROPEAN PATENT APPLICATION**
published in accordance with Art. 153(4) EPC

(43) Date of publication:
**17.04.2024  Bulletin 2024/16**

(21) Application number: **22819953.5**

(22) Date of filing: **18.04.2022**

(51) International Patent Classification (IPC):
**G01N 35/00** *(2006.01)*      **G01N 35/10** *(2006.01)*

(52) Cooperative Patent Classification (CPC):
**G01N 35/00; G01N 35/10**

(86) International application number:
**PCT/JP2022/018029**

(87) International publication number:
**WO 2022/259767 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.06.2021  JP 2021097054**

(71) Applicant: **HITACHI HIGH-TECH CORPORATION**
**Tokyo 105-6409 (JP)**

(72) Inventors:
• **HIRANO, Masaaki**
  **Tokyo 100-8280 (JP)**
• **SHIMADA, Masafumi**
  **Tokyo 105-6409 (JP)**

(74) Representative: **MERH-IP Matias Erny Reichl
Hoffmann
Patentanwälte PartG mbB
Paul-Heyse-Strasse 29
80336 München (DE)**

(54) **DISPENSING DEVICE, AUTOMATIC ANALYSIS DEVICE, AND DISPENSING METHOD**

(57)     The present disclosure provides a technique for determining, with high accuracy, an abnormality that occurs when a plurality of types of liquids are simultaneously dispensed. A dispensing device of the present disclosure includes: a dispensing nozzle; a pressure source; a sensor configured to detect a pressure inside the dispensing nozzle; a processor configured to control the dispensing nozzle and the pressure source, to perform aspiration of a second liquid different from a first liquid in a state where the first liquid is aspirated and held, and to determine an abnormality during the aspiration of the second liquid; and a storage device configured to store reference pressure data and predetermined threshold. A plurality of pieces of at least one of the reference pressure data and the predetermined threshold are acquired in advance and stored in the storage device so as to respectively correspond to different physical property values of the first liquid. The processor acquires pressure data to be a target of abnormality determination, and selects, according to the physical property values of the first liquid, one of a plurality of pieces of the reference pressure data if the plurality of pieces of the reference pressure data are stored, and one of a plurality of pieces of the predetermined threshold if the plurality of pieces of the predetermined threshold are stored.

*FIG. 4*

EP 4 354 147 A1

## Description

Technical Field

The present disclosure relates to a dispensing device, an automatic analysis device, and a dispensing method.

Background Art

An automatic analysis device performs quantitative analysis or qualitative analysis of specific components contained in biological samples such as blood and urine. Such the automatic analysis device is indispensable for today's diagnosis for reasons such as reproducibility and high processing speed of analysis results. In recent years, with a demand for reduction in device cost and analysis cost, it is required to reduce an amount of reagents used for analysis. Therefore, a dispensing device mounted on the automatic analysis device is required to dispense samples and reagents with high accuracy.

Blood serum or blood plasma is often used as a sample to be dispensed by a dispensing device of an automatic analysis device. In such dispensing of samples, there is a case in which an abnormality occurs due to clogging of a nozzle of the dispensing device with a solid content such as a high viscosity liquid or fibrin. When an abnormality occurs, it is not possible to dispense a predetermined amount of sample, and therefore an accurate analysis result cannot be obtained.

In order to address dispensing abnormality, methods have been proposed in which a pressure sensor is connected to a flow path of a dispensing device, and clogging of a nozzle is detected by measuring pressure fluctuation. PTL 1 describes a technique of "The pressure sensor 14 is connected to the dispensing flow path system including the sample probe 1 and the dispensing syringe 3, and a plurality of output values of the pressure sensor at the time of the sample dispensing operation are acquired. The plurality of obtained pressure sensor output values are used as items to perform a multi-item analysis (Mahalanobis distance) and compared with a threshold value, and whether dispensing has been normally performed is determined" (see Abstract of PTL 1).

PTL 2 describes a technique of "An automatic analysis device includes: a probe that dispenses a liquid; a syringe that generate pressure fluctuation for the probe to dispense the liquid; a flow path that connects the probe and the syringe; a pressure sensor that measures a pressure in the flow path when the probe dispenses the liquid; a storage unit that stores time-series data of the pressure measured by the pressure sensor; a simulator that calculates a reference pressure waveform of a liquid flow in the flow path on the basis of a physical model, and a determination unit that determines a dispensing state of a liquid to be determined on the basis of information of the time-series data of the pressure when the probe dispenses the liquid to be determined and the reference pressure waveform calculated by the simulator" (see Abstract of PTL 2).

Citation List

Patent Literatures

PTL 1: JP 2008-224691 A
PTL 2: JP 2019-124529 A

Summary of Invention

Technical Problem

Meanwhile, means for reducing the device cost includes reduction in component cost and the number of components. For the dispensing device, it is effective to dispense a sample and a reagent using one dispensing device for cost reduction. In this case, it is possible to suppress a decrease in the processing speed by performing aspiration of a sample after a reagent is aspirated and held in the nozzle without being discharged, and discharging the reagent and the sample at the same time.

In the case where the sample and the reagent are dispensed at one time as described above, in determination of dispensing abnormality based on pressure fluctuation during aspiration of the sample, a difference in viscosities and a difference in fluid volumes of the reagent affect the pressure. Thus, there is a possibility that accurate determination is hindered. In PTLs 1 and 2, there is no discussion to perform determination of abnormality when a sample and a reagent are dispensed at one time.

Therefore, the present disclosure provides a technique for determining, with high accuracy, an abnormality that occurs when a plurality of types of liquids are simultaneously dispensed.

Solution to Problem

In order to solve the above problem, a dispensing device of the present disclosure includes: a dispensing nozzle; a pressure source configured to generate pressure fluctuation for aspiration and discharge of a fluid by the dispensing nozzle; a sensor configured to detect a pressure inside the dispensing nozzle; a processor configured to control driving of the dispensing nozzle and driving of the pressure source, to perform aspiration of a second liquid different from a first liquid in a state where the first liquid is aspirated and held, and to determine an abnormality during the aspiration of the second liquid; and a storage device configured to store reference pressure data and predetermined threshold that are used for the determination. A plurality of pieces of at least one of the reference pressure data and the predetermined threshold are acquired in advance and stored in the storage device so as to respectively correspond to different physical property values of the first liquid. The processor is configured to: acquire pressure data to be a target of abnormality determination from a detection signal of the sensor during the aspiration of the second liquid; select, according to the physical property value of the first liquid, one of a plurality of pieces of the reference pressure data if the plurality of pieces of the reference pressure data are stored, and one of a plurality of pieces of the predetermined threshold if the plurality of pieces of the predetermined threshold are stored; and calculate a statistical distance between the pressure data to be the target of the determination and the reference pressure data, determine to be abnormal when the statistical distance is larger than the predetermined threshold, and determine to be normal when the statistical distance is equal to or smaller than the predetermined threshold.

Further features related to the present disclosure will become apparent from the description of the present specification and the accompanying drawings. In addition, aspects of the present disclosure are achieved and realized by elements, combinations of various elements, and the following detailed description and the aspects of the appended claims. The description of the present specification is merely exemplary, and does not limit the scope of the claims or application examples of the present disclosure in any sense.

Advantageous Effects of Invention

According to the technique of the present disclosure, it is possible to determine, with high accuracy, an abnormality that occurs when a plurality of types of liquids are simultaneously dispensed. Problems, configurations, and effects other than those described above will become apparent from the following description of embodiments.

Brief Description of Drawings

[FIG. 1] FIG. 1 is an outline diagram illustrating a configuration of an automatic analysis device.
[FIG. 2] FIG. 2 is an outline diagram illustrating a configuration of a dispensing device.
[FIG. 3] FIG. 3 is a schematic diagram illustrating a dispensing sequence of two types of liquids.
[FIG. 4] FIG. 4 is a flowchart showing a method of determining dispensing abnormality.
[FIG. 5] FIG. 5 is a schematic diagram illustrating an example of determination reference data.
[FIG. 6] FIG. 6 is a diagram illustrating an example of a pressure waveform during aspiration of a sample in a state where a low-viscosity reagent is held.
[FIG. 7] FIG. 7 is a diagram illustrating an example of a pressure waveform during aspiration of a sample in a state where a high-viscosity reagent is held.
[FIG. 8] FIG. 8 is a conceptual diagram illustrating selection processing of the determination reference data and threshold of a statistical distance according to a first embodiment.
[FIG. 9] FIG. 9 is a conceptual diagram illustrating selection processing of the determination reference data and threshold of a statistical distance according to a second embodiment.

Description of Embodiments

[First Embodiment]

<Configuration Example of Automatic Analysis Device>

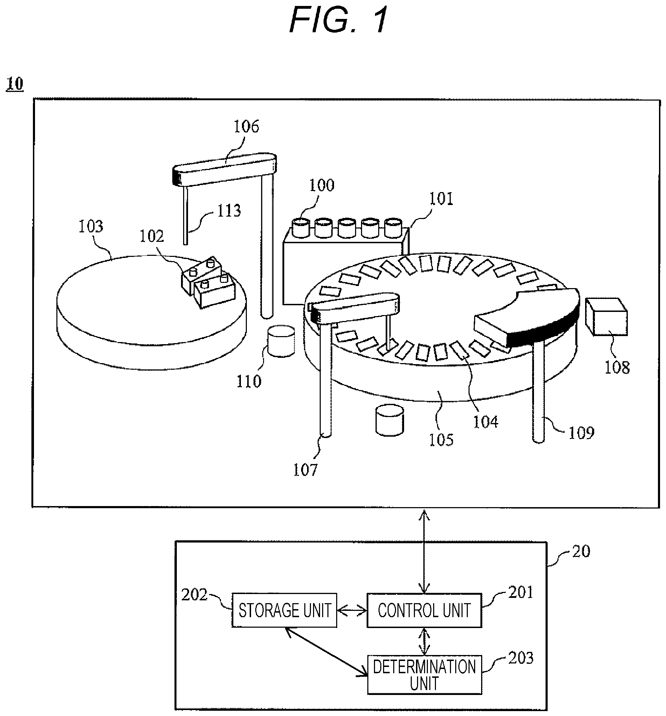

FIG. 1 is an outline diagram illustrating a configuration of an automatic analysis device 10 according to a first embodiment. The automatic analysis device 10 includes a sample container 100, a sample rack 101, a reagent bottle 102, a reagent disk 103, a reaction cell 104, a cell disk 105, a dispensing device 106, an agitation unit 107, a measurement unit 108, a cleaning unit 109, and a cleaning unit 110. The automatic analysis device 10 is connected to a control device 20.

The sample container 100 contains a sample to be analyzed. On the sample rack 101, a plurality of sample containers 100 can be placed. The reagent bottle 102 contains a reagent. On the reagent disk 103, a plurality of reagent bottles 102 can be placed. The sample and the reagent are dispensed into the reaction cell 104, and a reaction liquid of these is obtained. On the cell disk 105, a plurality of reaction cells 104 can be placed. The dispensing device 106 moves a certain amount of the sample within the sample container 100 into the reaction cell 104, and moves a certain amount of the reagent within the reagent bottle 102 into the reaction cell 104. The agitation unit 107 agitates and mixes the sample and the reagent dispensed into the reaction cell 104. The measurement unit 108 irradiates the reaction liquid in the reaction cell 104 with light, receives light (reflected light, transmitted light, fluorescence, and the like) obtained from the reaction cell 104, and outputs a detection signal to the control device 20. The cleaning unit 109 cleans the reaction cell 104. The cleaning unit 110 cleans the nozzle 113 of the dispensing device 106.

The control device 20 can be configured by a computer device including a processor, a memory that stores a program, and an input/output device. The control device 20 includes a control unit 201, a storage unit 202, and a determination unit 203 as functional modules implemented by the processor executing the program. The control unit 201 controls each of components of the automatic analysis device 10. In addition, the control unit 201 analyzes components in the sample based on the detection signal received from the measurement unit 108. The storage unit 202 stores control parameters, measured data, and determination reference data for determining dispensing abnormality in the memory or the storage device. The determination unit 203 determines abnormality in dispensing by the dispensing device 106.

The quantitative analysis of a certain component in the sample can be performed in the following procedure, for example. First, a certain amount of the sample in the sample container 100 is dispensed into the reaction cell 104 by the dispensing device 106. Next, a certain amount of the reagent in the reagent bottle 102 is dispensed into the reaction cell 104 by the dispensing device 106. Subsequently, the sample and the reagent in the reaction cell 104 are agitated by the agitation unit 107 to obtain the reaction liquid. If necessary, a plurality of reagents are added and dispensed into the reaction cell 104 by the dispensing device 106. At the time of dispensing, the sample container 100, the reagent bottle 102, and the reaction cell 104 are moved to predetermined positions by conveyance of the sample rack 101, rotation of the reagent disk 103, and rotation of the cell disk 105. After completion of the reaction, the cleaning unit 109 cleans the inside of the reaction cell 104, and the following analysis is performed. The measurement unit 108 measures absorbance of the reaction liquid and outputs the absorbance to the control unit 201. The control unit 201 accumulates absorbance data in the storage unit 202. The control unit 201 can analyze an amount of components based on the Lambert-Beer law using the accumulated absorbance data and calibration curve data.

<Configuration Example of Dispensing Device>

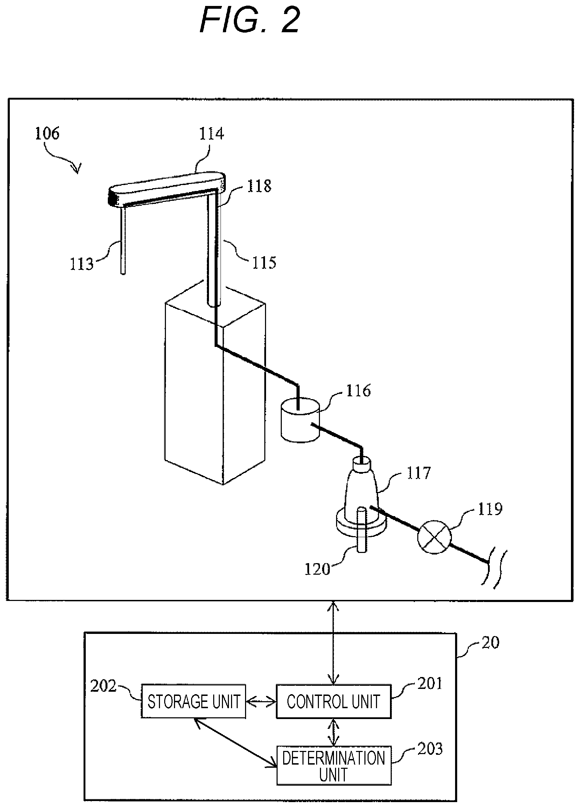

FIG. 2 is an outline diagram illustrating a configuration of the dispensing device 106. The dispensing device 106 includes a nozzle 113, an arm 114, a shaft 115, a pressure sensor 116, a syringe driver 117, a pipe 118, an electromagnetic valve 119, and a plunger 120.

The nozzle 113 is held at one end portion of the arm 114. The other end portion of the arm 114 is installed at an upper end portion of the shaft 115. The arm 114 is rotatable together with rotation of the shaft 115. The shaft 115 is configured to be movable vertically and rotatable by an actuator (not illustrated). The nozzle 113, the pressure sensor 116, and the syringe driver 117 are connected via the pipe 118. The dispensing flow path is configured such that a distal side can be opened by the nozzle 113 and a base side can be closed by the electromagnetic valve 119. The syringe driver 117 is provided with the plunger 120, and it is possible to perform aspiration and discharge of a liquid by driving the plunger 120.

A dispensing operation of a liquid by the dispensing device 106 can be controlled by the control unit 201 of the control device 20. The shaft 115 and the plunger 120 are respectively driven by motors, and drive signals of the motors are transmitted from the control unit 201 of the control device 20. The control unit 201 reads a condition for generating the drive signals from the storage unit 202.

In the dispensing operation, first, the control unit 201 closes the electromagnetic valve 119 and drives the plunger 120 to perform aspiration and discharge a liquid to be dispensed at a tip end of the nozzle 113. After completion of the dispensing operation, the control unit 201 opens the electromagnetic valve 119 and supplies cleaning water from the base side. During the dispensing operation, the control unit 201 receives the detection signal of the pressure sensor 116. The control unit 201 transmits the time-series data of the pressure to the determination unit 203. The determination unit 203 determines whether or not there is an abnormality in dispensing using data serving as a reference for determination of dispensing abnormality. Details of a method of determining abnormality according to the present embodiment will be described later.

<Dispensing Method of Dispensing a Plurality of Types of Liquids>

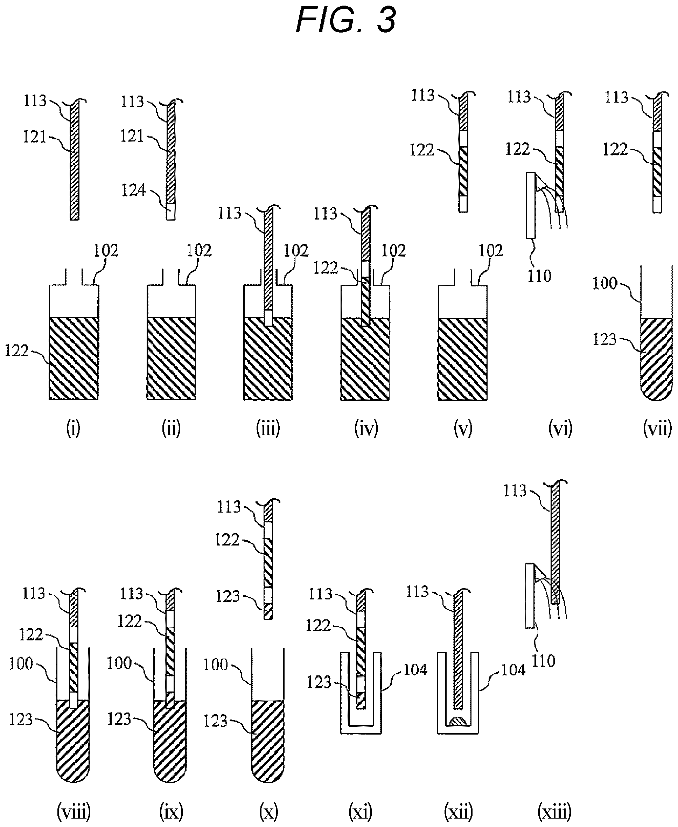

FIG. 3 is a schematic diagram illustrating a dispensing sequence of two types of liquids. Hereinafter, steps in which a reagent contained in the reagent bottle 102 and a sample contained in the sample container 100 are dispensed into the reaction cell 104 at one time by the dispensing device 106 will be described. Note that an actual main body of the dispensing operation is the control device 20 that drives the dispensing device 106, but the dispensing device 106 is described as a main body for simplification in the dispensing operation described below.

Step (i) shows an initial state at the start of dispensing, and the nozzle 113 is filled with system water 121. Next, as shown in step (ii), the dispensing device 106 performs aspiration of segmenting air 124 into the nozzle 113. Next, as shown in step (iii), the dispensing device 106 lowers the nozzle 113 to a liquid level of the reagent 122. Next, as shown in step (iv), the dispensing device 106 aspirates the reagent 122 into the nozzle 113 and holds the reagent in the nozzle 113. Next, as shown in step (v), the dispensing device 106 raises and pulls the nozzle 113 out from the reagent bottle 102, and performs aspiration of the segmenting air 124 into the nozzle 113 again. Next, as shown in step (vi), the dispensing device 106 cleans the nozzle 113 by the cleaning unit 110 to remove an excess reagent attached to an outer periphery of the nozzle 113. Subsequently, as shown in step (vii), the dispensing device 106 moves the nozzle 113 to a position of the sample container 100. Next, as shown in step (viii), the dispensing device 106 lowers the nozzle 113 to a liquid level of the sample 123. Next, as shown in step (ix), the dispensing device 106 aspirates the sample 123 into the nozzle 113 and holds the sample in the nozzle 113. Next, as shown in step (x), the dispensing device 106 raises and pulls the nozzle 113 out from the sample container 100. Next, as shown in step (xi), the dispensing device 106 moves the nozzle 113 to a position of the reaction cell 104. Subsequently, as shown in step (xii), the dispensing device 106 discharges the sample 123 and the reagent 122 held in the nozzle 113 into the reaction cell 104. Finally, as shown in step (xiii), the dispensing device 106 cleans inside and outside of the nozzle 113 by the cleaning unit 110, and moves to the dispensing step of the next sample.

As described above, by dispensing the sample 123 and the reagent 122 with the one dispensing device 106, it is possible to realize cost reduction by reducing the number of components. In addition, in the case where the reagent and the sample are dispensed by the one dispensing device 106, it is possible to suppress a decrease in the processing speed by continuously performing aspiration of the reagent and the sample as described above.

<Method of Determining Dispensing Abnormality>

In the case where dispensing abnormality is determined in the dispensing method as described above, it is conceivable to determine dispensing abnormality based on outputs of the pressure sensor 116 provided for the dispensing device 106 in step (iv) of performing aspiration of the reagent 122, step (ix) of performing aspiration of the sample 123, and step (xii) of discharging the sample 123 and the reagent 122. In particular, in step (ix) of aspirating the sample 123, since the reagent 122 is held in the nozzle 113, physical property values such as a viscosity and a fluid volume of the reagent 122 also affect pressure fluctuation in addition to an aspiration state of the sample 123. Therefore, the present embodiment proposes a method for determining dispensing abnormality based on pressure fluctuation when the sample 123 (second liquid) is aspirated in a state where the reagent 122 (first liquid) is held by the nozzle 113.

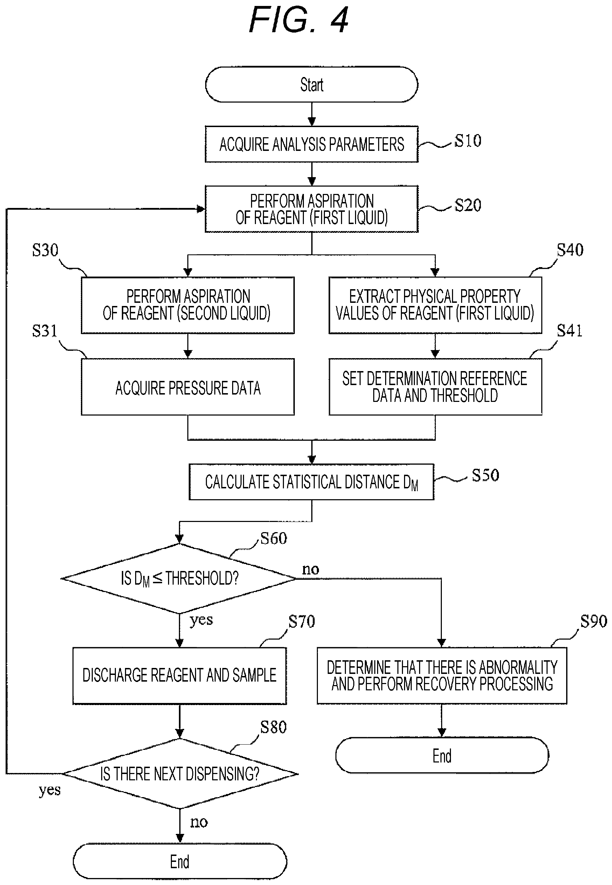

FIG. 4 is a flowchart showing the method of determining dispensing abnormality executed by the control device 20.

(Step S10)

The control unit 201 acquires analysis parameters from the storage unit 202. The analysis parameters include at least information such as a type, a fluid volume, and a viscosity of the reagent 122 (first liquid) used for analysis, information such as a fluid volume of the sample 123 (second liquid) to be analyzed, and other information necessary for analysis (for example, analysis items, wavelengths of light to be detected by the measurement unit 108, and the like).

(Step S20)

The control unit 201 drives the dispensing device 106 based on the analysis parameters to perform aspiration of the reagent 122 (first liquid) into the nozzle 113.

(Step S30)

The control unit 201 drives the dispensing device 106 based on the analysis parameters to perform aspiration of the sample 123 (second liquid) into the nozzle 113.

(Step S31)

The control unit 201 acquires a detection signal of a pressure during aspiration of the sample 123 from the pressure sensor 116. The control unit 201 outputs the detection signal to the determination unit 203 as time-series data (pressure data) of the pressure used as a target of determination of abnormality.

(Step S40)

Simultaneously with Step S30, the control unit 201 extracts physical property values of the reagent 122 including the fluid volume and the viscosity of the reagent 122 from the analysis parameters. The control unit 201 outputs the physical property values to the determination unit 203.

(Step S41)

Simultaneously with Step S31, the control unit 201 selects determination reference data and threshold of a statistical distance $D_M$ based on the physical property values of the reagent 122, reads the same from the storage unit 202, and outputs the same to the determination unit 203. The determination reference data is a set of known data acquired in advance. A pressure value at each time in normal aspiration of the sample 123 is stored as a feature variable for each variation (event) of the physical property values of the reagent 122 and the sample 123 (reference pressure data). A method of selecting the determination reference data and the threshold of the statistical distance will be described later.

(Step S50)

The determination unit 203 calculates the statistical distance $D_M$ between the pressure data to be determined and the determination reference data. The statistical distance indicates how much the pressure data to be determined deviates from the determination reference data. That is, the statistical distance is an index obtained by quantifying similarity between two events represented by a plurality of feature variables. In the present embodiment, a Mahalanobis distance is calculated as an example of the statistical distance.

(Step S60)

The determination unit 203 determines whether or not the calculated statistical distance $D_M$ is equal to or less than the threshold. When the statistical distance $D_M$ is equal to or less than the threshold (yes), processing proceeds to Step S70. When the statistical distance $D_M$ is larger than the threshold (no), the processing proceeds to Step S90.

(Step S70)

The determination unit 203 outputs a determination result indicating that there is no abnormality to the control unit 201. The control unit 201 drives the dispensing device 106 to discharge the reagent 122 and the sample 123 to the predetermined reaction cell 104.

(Step S80)

The control unit 201 determines whether or not there is next dispensing. When there is the next dispensing (yes), the processing returns to Step S20. In a case where there is no next dispensing (no), that is, in a case where all the dispensing has been completed, the processing ends.

(Step S90)

When the statistical distance $D_M$ is larger than the threshold, the determination unit 203 determines that there is an aspiration abnormality and outputs a determination result to the control unit 201. Upon reception of the determination result that there is an abnormality, the control unit 201 performs recovery processing, and the processing ends. The recovery processing is processing of outputting an alarm by the control unit 201 through an output device such as a display device or a speaker, and processing of executing an operation for proceeding to processing of the next sample.

(Determination Reference Data)

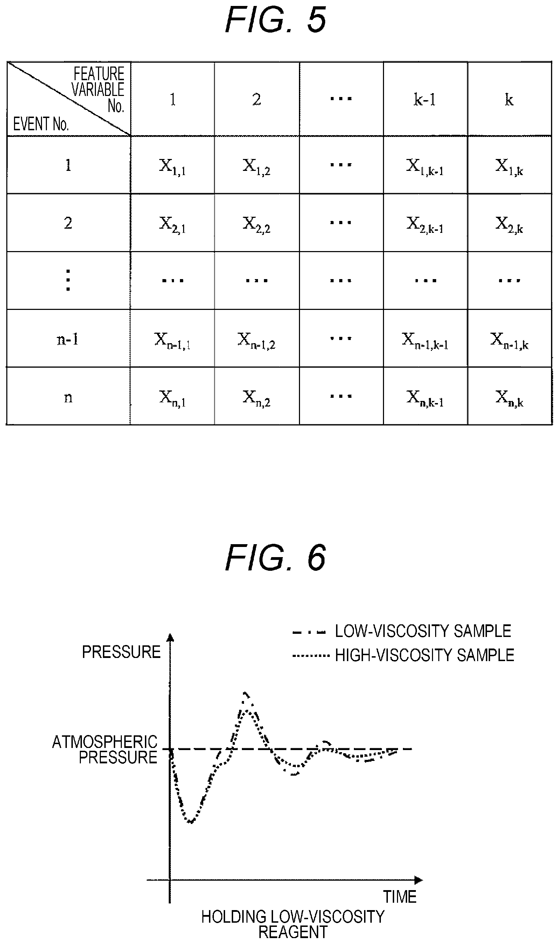

FIG. 5 is a schematic diagram illustrating an example of determination reference data according to the first embodiment. As illustrated in FIG. 5, a piece of the determination reference data is provided for each of n events, and each piece of data of the n events has k feature variables (n, k is a positive integer) . The events indicate variations (conditions) of characteristics (physical property values) of the reagent 122 and the sample 123, respectively. Specifically, an event No. 1 corresponds to, for example, an event in which the viscosity of the reagent 122 is low and the fluid volume is small. An event No. 2 corresponds to, for example, an event in which the viscosity of the reagent 122 is low and the fluid volume is medium. The events of the determination reference data may also correspond to the fluid volumes of the sample 123. The feature variables are output values from the pressure sensor 116 at each time k when the sample 123 having normal physical property values is aspirated while the reagent 122 is held.

As illustrated in FIG. 5, for example, in the event No. 1, the output values from the pressure sensor 116 in aspiration of the sample 123 are stored in the form of $X_{1,1}$, $X_{1,2}$, •••, $X_{1,k-1}$, and $X_{1,k}$ as feature variables X (time series of the reference pressure data). In Step S31 described above, the control unit 201 acquires feature variables Y (time series of the pressure data to be determined) in the form of $Y_1$, $Y_2$, •••, $Y_{k-1}$, and $Y_k$ for an event to be determined, and outputs the feature variables Y to the determination unit 203.

(Calculation Method of Statistical Distance)

In Step S50 described above, the determination unit 203 calculates, for the feature variables X from the events No. 1 to No. n of the determination reference data, averages Z of the feature variables as $Z_1$, $Z_2$, •••, and $Z_k$ and standard deviations σ of the feature variables as $\sigma_1$, $\sigma_2$, •••, and $\sigma_k$. Alternatively, the averages Z and the standard deviations σ of the feature variables X may be calculated in advance by the control unit 201 and stored in the storage unit 202. In this case, the averages Z and the standard deviations σ of the feature variables X may be read by the determination unit 203 in Step S50, or read by the control unit 201 and output to the determination unit 203 in Step S41. Then, the determination unit 203 performs calculation of Formula (1) using the averages Z and each standard deviations σ of the feature variables of the determination reference data, and normalizes the pressure data to be determined.

[Formula 1]

$$X_i = \frac{y_i - z_i}{\sigma_i} \qquad (1)$$

where i = 1, 2, •••, k-1, k.

Then, the determination unit 203 obtains a correlation matrix as a matrix A of k × k for each feature variable of k items of n events of the determination reference data. The determination unit 203 performs the calculation of Formula (2) using an inverse matrix $A^{-1}$, and obtains the Mahalanobis distance $D_M$.

[Formula 2]

$$D_M = \sqrt{\frac{1}{k}(X_1 \quad \cdots \quad X_k)A^{-1}\begin{pmatrix} X_1 \\ \vdots \\ X_k \end{pmatrix}} \qquad (2)$$

Note that examples of the statistical distance applicable to the abnormality determination of the present embodiment other than the Mahalanobis distance include a Euclidean distance, a standard Euclidean distance, a Manhattan distance, a Chebyshev distance, a Minkowski distance, and a multivariate normal density.

(Selection of Determination Reference Data and Threshold)

It will be described is the significance of selecting the determination reference data and the threshold according to an event to be analyzed (that is, the determination reference data and the threshold to be used are changed according to an event to be analyzed).

The characteristics of the sample 123 to be analyzed are different for analysis items, and in particular, there are differences in viscosities and fluid volumes. When fluid volumes of the sample 123 is different, an aspiration speed and time required for aspiration are different. Accordingly, it is necessary to individually set acquisition time of the pressure data and the like. Therefore, by preparing the determination reference data individually for each fluid volume of the sample 123, the statistical distance can be calculated more accurately, and abnormality can be determined with high accuracy. On the other hand, when the physical property value of viscosity of the sample 123 is in a specific range, the sample 123 can be treated as a liquid that can be normally dispensed.

FIG. 6 is a diagram illustrating an example of a pressure waveform during aspiration of the sample 123 (low-viscosity sample and high-viscosity sample) in a state where the low-viscosity reagent 122 is held in the nozzle 113. As illustrated in FIG. 6, for example, there is a difference in pressure waveforms between the low-viscosity sample and the high-viscosity sample. By using, as the determination reference data, a pressure waveform (reference pressure data) in aspiration of the sample 123 among the samples, whose viscosity in a range in which normal dispensing can be performed, the statistical distance becomes a low numerical value between the pressure waveform in aspiration of the normal sample 123 and the determination reference data. When the statistical distance is below the threshold, the dispensing is determined to be normal.

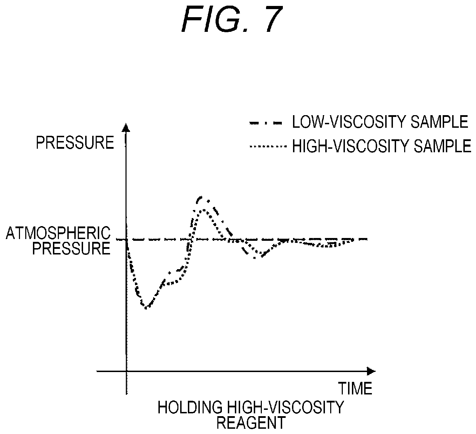

The reagent 122 also has differences in viscosities and fluid volumes depending on the analysis item. FIG. 7 is a diagram illustrating an example of a pressure waveform during aspiration of the sample 123 in a state where the high-viscosity reagent 122 is held in the nozzle 113. As shown in FIG. 7, even when the sample 123 having the same physical properties as in FIG. 6 is aspirated, there is a difference in pressure during aspiration. Therefore, assuming that the determination reference data is a pressure data group acquired when the sample 123 having a physical property value in a normal range is aspirated in a state where the low-viscosity reagent is held, even if the same sample 123 is dispensed in a state where the high-viscosity reagent is held, the statistical distance is calculated to have a higher value than that in the state where the low-viscosity reagent is held. Therefore, when the same threshold is applied, there is a possibility that the dispensing is determined to be abnormal as the statistical distance exceeds the threshold. In particular, deterioration in determination accuracy is caused by applying a pressure data group (determination reference data) and threshold in aspiration of the sample 123 in a state of holding the reagent 122 having a specific physical property (first physical property) to the reagent 122 having a physical property significantly different from the specific physical property (second physical property).

Therefore, in the first embodiment, in Step S41, the control unit 201 selects and reads the determination reference data and the threshold of the statistical distance according to the physical property values of the reagent 122.

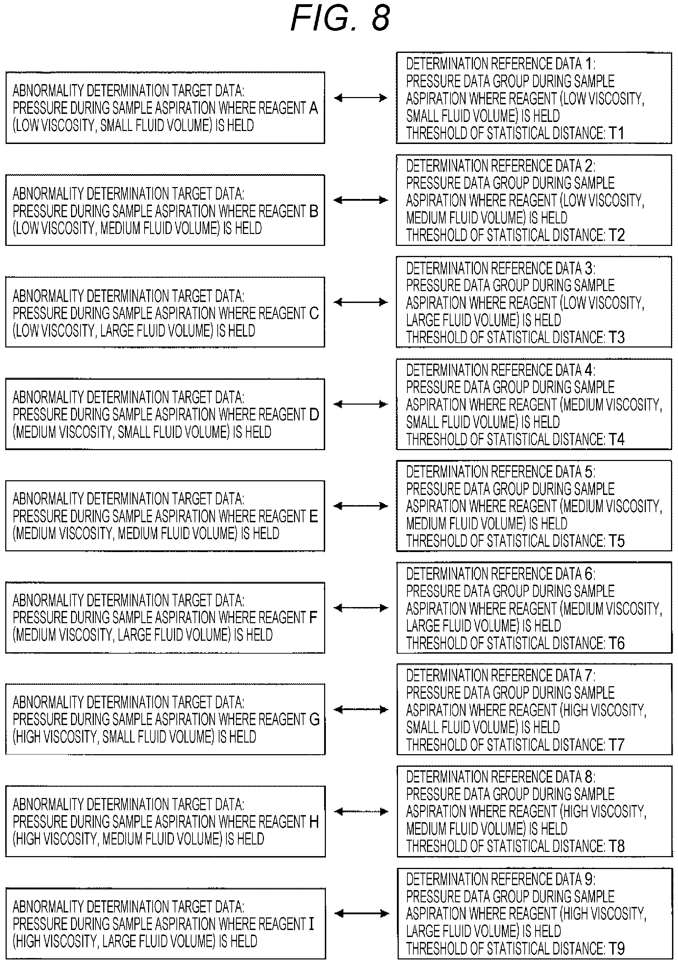

FIG. 8 is a conceptual diagram illustrating selection processing of the determination reference data and the threshold of the statistical distance. As illustrated on the right side of FIG. 8, the storage unit 202 stores, for example, pieces of the determination reference data 1-9 (respectively corresponding to rows in FIG. 5) and pieces of the threshold T1 to T9 of statistical distances respectively corresponding to the pieces of the determination reference data 1-9 as sets. As described above, each of the pieces of the determination reference data 1-9 is the reference pressure data acquired in normal aspiration of the sample 123 in a state where the reagent 122 having a specific physical property is held.

FIG. 8 illustrates, on the left side of, that pressure data in aspiration of a sample, in a state where each of a reagent A to a reagent I is held is acquired as an abnormality determination target. As illustrated in FIG. 8, when the determination of dispensing abnormality is performed, the control unit 201 selects determination reference data and threshold of a statistical distance for a condition close to a physical property value of a reagent in an event to be determined (Step S41). Note that, in FIG. 8, the event to be determined and a set of the determination reference data and the threshold are shown to correspond on a one-to-one basis. The determination reference data can be selected to correspond on a many-to-many basis. In FIG. 8, the determination reference data is classified into three stages of the viscosity of the reagent: low, medium, and high, and is classified into three stages of the fluid volume: small, medium, and large. The number of steps of the physical property values of the reagent is not limited to three, and may be two or four or more. In FIG. 8, the physical property values of the reagent to be determined in each of the determination reference data are classified into the levels such as small, medium, and large. The physical property values of the reagent may be specified by specific numerical values.

(Modifications)

The method of selecting both the determination reference data and the threshold of the statistical distance has been exemplified above. Alternatively, the determination reference data may be common regardless of the physical property values of the reagent 122, and the threshold of the statistical distance may be selected according to the physical property values of the reagent 122. Alternatively, the threshold of the statistical distance may be common, and the determination reference data may be selected according to the physical property values of the reagent 122. In this manner, accuracy of the abnormality determination can be improved by storing at least one of the determination reference data and the threshold of the statistical distance for each physical property value of the reagent 122, and making selection according to the physical property values of the reagent 122 in the event to be determined.

For the physical property values of the reagent 122, exemplified is the method of setting the viscosity range and the fluid volume range individually and selecting the determination reference data and the threshold under the condition of the combination thereof. Alternatively, the determination reference data and the threshold may be selected based on the pressure loss of the reagent 122 in the nozzle 113 when the sample 123 is aspirated. Examples of a physical formula representing a pressure loss due to friction in a pipeline include a Hagen-Poiseuille equation in Formula (3).

[Formula 3]

$$P_{loss} = 128\mu L \frac{Q}{\pi d^4} \qquad (3)$$

In formula (3), $P_{loss}$ represents the pressure loss. $\mu$ represents a viscosity of a fluid. L represents a pipeline length. $\pi$ represents a circumferential ratio. d represents a pipeline diameter. Q represents a flow rate in the pipeline. The pipeline diameter d is determined by a shape of the nozzle 113. The flow rate Q in the pipeline is determined by a speed at aspiration of the sample 123. The viscosity $\mu$ of a fluid is the viscosity of the reagent 122. The pipeline length L is calculated from the fluid volume of the reagent 122 and the pipeline diameter. By using the pressure loss $P_{loss}$ of the reagent 122 in this manner, comparison of an influence of the physical property values of the reagent 122 is facilitated. That is, it is possible to prevent the determination accuracy of the aspiration abnormality from being deteriorated, by selecting one of the plurality of pieces of the determination reference data whose pressure loss caused by the reagent 122 when the determination reference data is acquired is the closest to a pressure loss caused by the reagent 122 when the pressure data to be an abnormality determination target is acquired.

<Summary of First Embodiment>

As described above, the dispensing device 106 of the first embodiment includes: the nozzle 113, the plunger 120 (pressure source) configured to generate pressure fluctuation for aspiration and discharge of a fluid by the nozzle 113, the pressure sensor 116 configured to detect a pressure inside the nozzle 113, the control device 20 (processor) configured to perform aspiration of the sample 123 (second liquid) in a state where the reagent 112 (first liquid) is aspirated and held, and to determine an abnormality during the aspiration of the sample 123, and the storage unit 202 (storage device) configured to store the determination reference data (reference pressure data) and the threshold of the statistical distance that are used for the determination. The plurality of pieces of at least one of the determination reference data and the threshold are acquired in advance and stored so as to respectively correspond to different physical property values of the reagent 112. The control device 20 is configured to: acquire the pressure data to be a target of abnormality determination from a detection signal of the pressure sensor 116 during the aspiration of the sample 123; select, according to the physical property values of the reagent 112, one of a plurality of pieces of the determination reference data if the plurality of pieces of the determination reference data are stored, and one of a plurality of pieces of the threshold if the plurality of pieces of the threshold are stored; calculate a statistical distance between the pressure data to be a target of the determination and the determination reference data; and determine to be abnormal when the statistical distance is larger than the threshold, and determine to be non-abnormal when the statistical distance is equal to or smaller than the threshold.

In this manner, in determination of aspiration abnormality of the second liquid, it is possible to accurately determine the dispensing abnormality by selecting appropriate parameters in accordance with the physical property values of the first liquid.

[Second Embodiment]

In the first embodiment, it has been described that one piece of the determination reference data is configured for each physical property value of one reagent. Alternatively, one piece of the determination reference data may be configured for each range of physical property values specified by physical property values of a plurality of (for example, two) reagents. In a second embodiment, an example in which the determination reference data is configured for each range of physical property values as described above will be described.

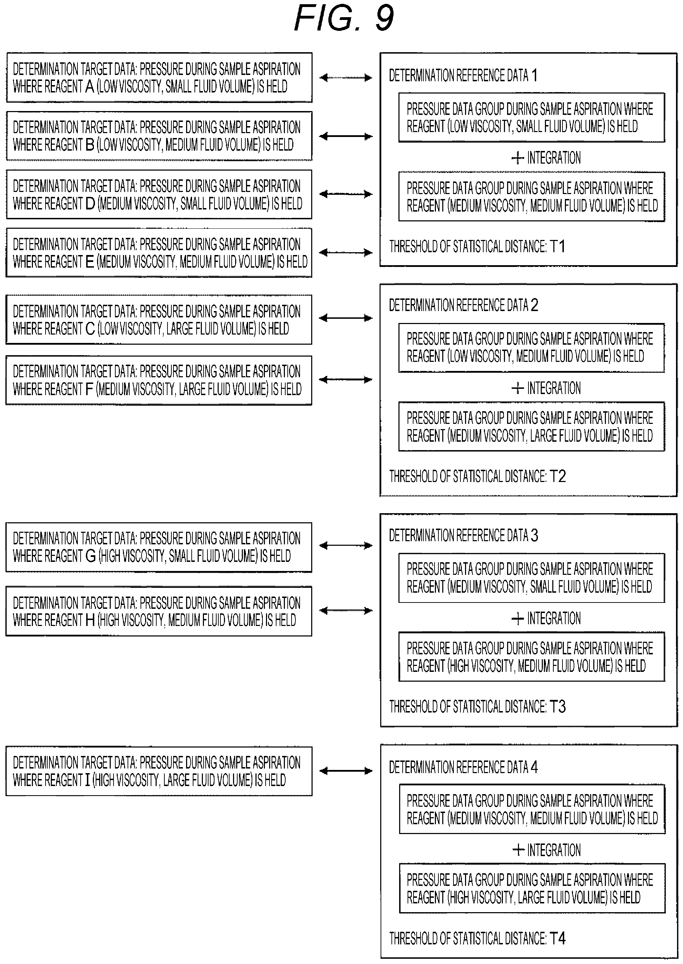

FIG. 9 is a conceptual diagram illustrating selection processing of the determination reference data and threshold of a statistical distance according to the second embodiment. As illustrated in FIG. 9, the storage unit 202 stores, for example, pieces of the determination reference data 1-4 (respectively corresponding to rows in FIG. 5) and pieces of the threshold T1 to T4 of statistical distances respectively corresponding to the pieces of the determination reference data 1-4 as sets. In the present embodiment, each of the pieces of the determination reference data 1-4 is data in which pressure data groups in two events are integrated. More specifically, the determination reference data is set for each range of the physical property value of the reagent with the physical property value of the reagent in one event as a lower limit and the physical property value of the reagent in the other event as an upper limit among the two events integrated in one piece of the determination reference data. For example, the piece of the determination reference data 1 is obtained by integrating a pressure data group in aspiration of the sample when the viscosity of the reagent is low and the fluid volume is small and a pressure data group in aspiration of the sample when the viscosity of the reagent is medium and the fluid volume is medium.

For example, when an event to be determined is aspiration of a sample in a state where the reagent A (low viscosity and small fluid volume) is held, the event corresponds to the lower limit of the viscosity and the lower limit of the fluid volume of the reagent 122 to be determined in the piece of the determination reference data 1. When an event to be determined is aspiration of a sample in a state where the reagent B (low viscosity and medium fluid volume) is held, the event corresponds to the upper limit of the fluid volume of the reagent in the piece of the determination reference data 1. When an event to be determined is aspiration of a sample in a state where the reagent E (viscosity is medium and fluid volume is medium) is held, the event corresponds to the upper limit of the viscosity and the upper limit of the fluid volume of the reagent 122 to be determined in the piece of the determination reference data 1.

As illustrated in FIG. 9, the combination of the pressure data groups integrated into one piece of the determination reference data can be, for example, a combination of adjacent ranges of the physical property values. Specifically, in the piece of the determination reference data 1, a pressure data group when the viscosity is low and the fluid volume is small and a pressure data group when the viscosity is medium and the fluid volume is medium are integrated.

As described above, the piece of the determination reference data 1 is obtained by integrating the pressure data group in aspiration of the sample in the state where the reagent 122 having the same physical property value as that of the reagent A is held, and the pressure data group in aspiration of the sample in the state where the reagent 122 having the same physical property value as that of the reagent E is held. In this manner, the determination reference data is configured for each range of the physical property value of the reagent. Accordingly, it is possible to select, when determining abnormality, the determination reference data corresponding to the physical property value of the reagent to be determined.

(Modifications)

In the second embodiment, it has been described that one piece of the determination reference data includes the integration of the pressure data group acquired using the reagent having the upper limit of the physical property value and the pressure data group acquired using the reagent having the lower limit of the physical property value. Alternatively, each piece of the determination reference data may include a pressure data group acquired using a reagent having an intermediate physical property value.

Further, the second embodiment has shown the example in which the upper limit and the lower limit are present in both the viscosity and the fluid volume in the physical property values of an acquisition condition of the pressure data groups to be integrated. Alternatively, in the determination reference data, one of the viscosity and the fluid volume may be set to a fixed value, and an upper limit and a lower limit may be present in the other.

In the piece of the determination reference data 1 shown in FIG. 9, the upper limit and the lower limit of the physical property value of the reagent 122 serving as the acquisition condition of the pressure data group are the same as the upper limit and the lower limit of the physical property value of the reagent 122 that is the acquisition condition of the determination target data. Note that, it is sufficient that the range of the physical property value of the determination reference data and the physical property value of the reagent in the event to be determined overlap with each other, and the upper limit and the lower limit are not necessarily the same.

FIG. 9 shows that the reagent B and the reagent E belong to a target range of the piece of the determination reference data 1. Note that, since the reagent B and the reagent E are boundary conditions between the target range of determination of the piece of the determination reference data 1 and a target range of determination of the piece of the determination reference data 2, it is originally possible to determine abnormality by applying either of the pieces of the determination reference data 1 or 2.

FIG. 9 shows that the target range of determination of the determination reference data is set by being divided into four ranges of physical property values. Alternatively, the target ranges of determination of the determination reference data may be combined into one. In this case, the determination reference data can be configured by integrating the pressure data group in aspiration of the sample in a state where the reagent 122 having the same physical property value as that of the reagent A is held and the pressure data group in aspiration of the sample in a state where the reagent 122 having the same physical property value as that of the reagent I is held.

The second embodiment has described the example in which in the comparison of the physical property values of the reagent 122 between the determination target data with the determination reference data, the viscosity and the fluid volume are individually combined to select the determination reference data and the threshold of the statistical distance. Alternatively, as in the first embodiment, a magnitude of the physical property values of the reagent 122 may be compared based on the pressure loss in the nozzle 113 by the reagent 122 when the sample 123 is aspirated.

<Summary of Second Embodiment>

As described above, in the second embodiment, the pressure data for a plurality of first liquids having different physical property values is integrated as the determination reference data (reference pressure data). As a result, the determination reference data has little variation in the statistical distance with respect to variation in the physical property values of the first liquid. Therefore, it is possible to avoid a decrease in determination accuracy due to a difference in the physical property values of the first liquid.

[Modifications]

The present disclosure is not limited to the above-described embodiments, and includes various modifications. For example, the above-described embodiments have been described in detail in order to describe the present disclosure in an easy-to-understand manner, and it is not necessary that all the described configurations are included. Further, a part of one embodiment can be replaced with a configuration of another embodiment. Moreover, a configuration of one embodiment may be added to a configuration of another embodiment. In addition, a part of a configuration of one embodiment can be added to, deleted from, or replaced with a part of a configuration of the other embodiments.

Reference Signs List

| | |
|---|---|
| 10 | automatic analysis device |
| 20 | control device (processor) |
| 100 | sample container |
| 102 | reagent bottle |
| 103 | reagent disk |
| 104 | reaction cell |
| 106 | dispensing device |
| 113 | nozzle (dispensing nozzle) |
| 116 | pressure sensor |
| 117 | syringe driver (pressure source) |
| 120 | plunger (pressure source) |

**Claims**

1. A dispensing device comprising:

a dispensing nozzle;
a pressure source configured to generate pressure fluctuation for aspiration and discharge of a fluid by the dispensing nozzle;
a sensor configured to detect a pressure inside the dispensing nozzle;
a processor configured to control driving of the dispensing nozzle and driving of the pressure source, to perform aspiration of a second liquid different from a first liquid in a state where the first liquid is aspirated and held, and to determine an abnormality during the aspiration of the second liquid; and
a storage device configured to store reference pressure data and predetermined threshold that are used for the determination,
wherein a plurality of pieces of at least one of the reference pressure data and the predetermined threshold are acquired in advance and stored in the storage device so as to respectively correspond to different physical property values of the first liquid, and
the processor is configured to:

acquire pressure data to be a target of abnormality determination from a detection signal of the sensor during the aspiration of the second liquid;
select, according to the physical property value of the first liquid, one of a plurality of pieces of the reference pressure data if the plurality of pieces of the reference pressure data are stored, and one of a plurality of pieces of the predetermined threshold if the plurality of pieces of the predetermined threshold are stored; and
calculate a statistical distance between the pressure data to be the target of the determination and the reference pressure data, determine to be abnormal when the statistical distance is larger than the predetermined threshold, and determine to be normal when the statistical distance is equal to or smaller than the predetermined threshold.

2. The dispensing device according to claim 1, wherein the reference pressure data includes normal pressure data in normal aspiration of the second liquid in a state where the first liquid is held in the dispensing nozzle, pieces of the normal pressure data being acquired in advance respectively for the different physical property values of the first liquid.

3. The dispensing device according to claim 1, wherein the physical property values are viscosities and fluid volumes.

4. The dispensing device according to claim 1, wherein the physical property values are pressure losses due to the first liquid in the dispensing nozzle in aspiration of the second liquid.

5. The dispensing device according to claim 1, wherein

the storage device stores a plurality of sets each including one piece of the reference pressure data and one piece of the predetermined threshold, and
the processor selects one of the plurality of sets in the determination, according to the physical property values of the first liquid.

6. The dispensing device according to claim 2, wherein the reference pressure data is configured by integrating a plurality of pieces of the normal pressure data for a plurality of the first liquids having different physical property values.

7. The dispensing device according to claim 6, wherein the plurality of pieces of the normal pressure data includes:

first normal pressure data acquired in aspiration of the second liquid in a state where the first liquid having a physical property value at an upper limit of a range of the physical property values is held in the dispensing nozzle; and
second normal pressure data acquired in aspiration of the second liquid in a state where the first liquid having a physical property value at a lower limit of the range of the physical property values is held in the dispensing nozzle.

8. The dispensing device according to claim 6, wherein the plurality of pieces of the normal pressure data includes:

first normal pressure data acquired in aspiration of the second liquid in a state where the first liquid having an upper limit of pressure losses in the dispensing nozzle by the first liquid is held in the dispensing nozzle; and
second normal pressure data acquired in aspiration of the second liquid in a state where the first liquid having a lower limit of the pressure losses in the dispensing nozzle by the first liquid is held in the dispensing nozzle.

9. The dispensing device according to claim 1, wherein the statistical distance is one of a Mahalanobis distance, a Euclidean distance, a standard Euclidean distance, a Manhattan distance, a Chebyshev distance, a Minkowski distance, and a multivariate normal density.

10. An automatic analysis device comprising the dispensing device according to claim 1.

11. A dispensing method executed by a processor of a dispensing device, the dispensing method comprising:

driving a pressure source configured to generate pressure fluctuation for aspiration and discharge of a fluid by a dispensing nozzle of the dispensing device to perform aspiration of a second liquid different from a first liquid in a state where the first liquid is aspirated and held by the dispensing nozzle;
receiving a detection signal of a pressure during aspiration of the second liquid from a sensor provided in the dispensing device, and acquiring pressure data to be a target of abnormality determination;
reading, from a storage device, reference pressure data and predetermined threshold being used for the abnormality determination; and
calculating a statistical distance between the pressure data to be the target of the determination and the reference pressure data, determining to be abnormal when the statistical distance is larger than the predetermined threshold, and determining to be normal when the statistical distance is equal to or smaller than the predetermined threshold,
wherein a plurality of pieces of at least one of the reference pressure data and the predetermined threshold are acquired in advance and stored in the storage device so as to respectively correspond to different physical property values of the first liquid, and
the reading includes selecting, according to the physical property value of the first liquid, one of a plurality of pieces of the reference pressure data if the plurality of pieces of the reference pressure data are stored, and one of a plurality of pieces of the predetermined threshold if the plurality of pieces of the predetermined threshold are stored.

# FIG. 1

10

# FIG. 2

# FIG. 3

(i)   (ii)   (iii)   (iv)   (v)   (vi)   (vii)

(viii)   (ix)   (x)   (xi)   (xii)   (xiii)

# FIG. 4

```
                    ┌─────────────┐
                    │    Start    │
                    └──────┬──────┘
                           ▼
              ┌──────────────────────────┐
              │ ACQUIRE ANALYSIS PARAMETERS │ ~ S10
              └──────────────┬───────────┘
                             ▼
              ┌──────────────────────────┐
      ┌──────▶│    PERFORM ASPIRATION     │ ~ S20
      │       │  OF REAGENT (FIRST LIQUID) │
      │       └──────────────┬───────────┘
      │                      │
      │        ┌─────────────┴──────────────┐
S30 ◁─┤        ▼                            ▼        ▷ S40
      │  ┌──────────────────┐    ┌──────────────────────┐
      │  │ PERFORM ASPIRATION │    │ EXTRACT PHYSICAL PROPERTY │
      │  │ OF REAGENT         │    │ VALUES OF REAGENT         │
      │  │ (SECOND LIQUID)    │    │ (FIRST LIQUID)            │
      │  └─────────┬─────────┘    └───────────┬──────────┘  S41
S31◁──┤            ▼                          ▼
      │  ┌──────────────────┐    ┌──────────────────────┐
      │  │ ACQUIRE PRESSURE │    │ SET DETERMINATION     │
      │  │ DATA             │    │ REFERENCE DATA AND    │
      │  └─────────┬────────┘    │ THRESHOLD             │
      │            │             └───────────┬──────────┘
      │            └──────────┬──────────────┘
      │                       ▼
      │        ┌────────────────────────────────┐
      │        │ CALCULATE STATISTICAL DISTANCE D_M │ ~ S50
      │        └────────────────┬───────────────┘
      │                         ▼
      │                    ╱ S60
      │              ┌────╱──────────┐       no
      │              ◇ IS D_M ≤ THRESHOLD? ◇──────────┐
      │              └───────┬───────┘                │
      │                   yes▼   S70                   ▼  S90
      │        ┌──────────────────────┐   ┌──────────────────────────┐
      │        │ DISCHARGE REAGENT AND │   │ DETERMINE THAT THERE IS   │
      │        │ SAMPLE                │   │ ABNORMALITY AND PERFORM   │
      │        └──────────┬───────────┘   │ RECOVERY PROCESSING       │
      │                   ▼   S80          └────────────┬─────────────┘
      │              ◇─────────────◇                    ▼
      └──────yes─────◇ IS THERE NEXT ◇            ┌──────────┐
                     ◇ DISPENSING?   ◇            │   End    │
                     └──────┬───────┘             └──────────┘
                          no▼
                     ┌──────────┐
                     │   End    │
                     └──────────┘
```

17

# FIG. 5

| EVENT No. \ FEATURE VARIABLE No. | 1 | 2 | ··· | k-1 | k |
|---|---|---|---|---|---|
| 1 | $X_{1,1}$ | $X_{1,2}$ | ··· | $X_{1,k-1}$ | $X_{1,k}$ |
| 2 | $X_{2,1}$ | $X_{2,2}$ | ··· | $X_{2,k-1}$ | $X_{2,k}$ |
| ⋮ | ··· | ··· | ··· | ··· | ··· |
| n-1 | $X_{n-1,1}$ | $X_{n-1,2}$ | ··· | $X_{n-1,k-1}$ | $X_{n-1,k}$ |
| n | $X_{n,1}$ | $X_{n,2}$ | ··· | $X_{n,k-1}$ | $X_{n,k}$ |

# FIG. 6

— · — LOW-VISCOSITY SAMPLE

·········· HIGH-VISCOSITY SAMPLE

PRESSURE

ATMOSPHERIC PRESSURE

TIME

HOLDING LOW-VISCOSITY REAGENT

# FIG. 7

# FIG. 8

| ABNORMALITY DETERMINATION TARGET DATA:<br>PRESSURE DURING SAMPLE ASPIRATION WHERE REAGENT A<br>(LOW VISCOSITY, SMALL FLUID VOLUME) IS HELD | ⟷ | DETERMINATION REFERENCE DATA 1:<br>PRESSURE DATA GROUP DURING SAMPLE<br>ASPIRATION WHERE REAGENT (LOW VISCOSITY,<br>SMALL FLUID VOLUME) IS HELD<br>THRESHOLD OF STATISTICAL DISTANCE: T1 |
|---|---|---|
| ABNORMALITY DETERMINATION TARGET DATA:<br>PRESSURE DURING SAMPLE ASPIRATION WHERE REAGENT B<br>(LOW VISCOSITY, MEDIUM FLUID VOLUME) IS HELD | ⟷ | DETERMINATION REFERENCE DATA 2:<br>PRESSURE DATA GROUP DURING SAMPLE<br>ASPIRATION WHERE REAGENT (LOW VISCOSITY,<br>MEDIUM FLUID VOLUME) IS HELD<br>THRESHOLD OF STATISTICAL DISTANCE: T2 |
| ABNORMALITY DETERMINATION TARGET DATA:<br>PRESSURE DURING SAMPLE ASPIRATION WHERE REAGENT C<br>(LOW VISCOSITY, LARGE FLUID VOLUME) IS HELD | ⟷ | DETERMINATION REFERENCE DATA 3:<br>PRESSURE DATA GROUP DURING SAMPLE<br>ASPIRATION WHERE REAGENT (LOW VISCOSITY,<br>LARGE FLUID VOLUME) IS HELD<br>THRESHOLD OF STATISTICAL DISTANCE: T3 |
| ABNORMALITY DETERMINATION TARGET DATA:<br>PRESSURE DURING SAMPLE ASPIRATION WHERE REAGENT D<br>(MEDIUM VISCOSITY, SMALL FLUID VOLUME) IS HELD | ⟷ | DETERMINATION REFERENCE DATA 4:<br>PRESSURE DATA GROUP DURING SAMPLE<br>ASPIRATION WHERE REAGENT (MEDIUM VISCOSITY,<br>SMALL FLUID VOLUME) IS HELD<br>THRESHOLD OF STATISTICAL DISTANCE: T4 |
| ABNORMALITY DETERMINATION TARGET DATA:<br>PRESSURE DURING SAMPLE ASPIRATION WHERE REAGENT E<br>(MEDIUM VISCOSITY, MEDIUM FLUID VOLUME) IS HELD | ⟷ | DETERMINATION REFERENCE DATA 5:<br>PRESSURE DATA GROUP DURING SAMPLE<br>ASPIRATION WHERE REAGENT (MEDIUM VISCOSITY,<br>MEDIUM FLUID VOLUME) IS HELD<br>THRESHOLD OF STATISTICAL DISTANCE: T5 |
| ABNORMALITY DETERMINATION TARGET DATA:<br>PRESSURE DURING SAMPLE ASPIRATION WHERE REAGENT F<br>(MEDIUM VISCOSITY, LARGE FLUID VOLUME) IS HELD | ⟷ | DETERMINATION REFERENCE DATA 6:<br>PRESSURE DATA GROUP DURING SAMPLE<br>ASPIRATION WHERE REAGENT (MEDIUM VISCOSITY,<br>LARGE FLUID VOLUME) IS HELD<br>THRESHOLD OF STATISTICAL DISTANCE: T6 |
| ABNORMALITY DETERMINATION TARGET DATA:<br>PRESSURE DURING SAMPLE ASPIRATION WHERE REAGENT G<br>(HIGH VISCOSITY, SMALL FLUID VOLUME) IS HELD | ⟷ | DETERMINATION REFERENCE DATA 7:<br>PRESSURE DATA GROUP DURING SAMPLE<br>ASPIRATION WHERE REAGENT (HIGH VISCOSITY,<br>SMALL FLUID VOLUME) IS HELD<br>THRESHOLD OF STATISTICAL DISTANCE: T7 |
| ABNORMALITY DETERMINATION TARGET DATA:<br>PRESSURE DURING SAMPLE ASPIRATION WHERE REAGENT H<br>(HIGH VISCOSITY, MEDIUM FLUID VOLUME) IS HELD | ⟷ | DETERMINATION REFERENCE DATA 8:<br>PRESSURE DATA GROUP DURING SAMPLE<br>ASPIRATION WHERE REAGENT (HIGH VISCOSITY,<br>MEDIUM FLUID VOLUME) IS HELD<br>THRESHOLD OF STATISTICAL DISTANCE: T8 |
| ABNORMALITY DETERMINATION TARGET DATA:<br>PRESSURE DURING SAMPLE ASPIRATION WHERE REAGENT I<br>(HIGH VISCOSITY, LARGE FLUID VOLUME) IS HELD | ⟷ | DETERMINATION REFERENCE DATA 9:<br>PRESSURE DATA GROUP DURING SAMPLE<br>ASPIRATION WHERE REAGENT (HIGH VISCOSITY,<br>LARGE FLUID VOLUME) IS HELD<br>THRESHOLD OF STATISTICAL DISTANCE: T9 |

# FIG. 9

| DETERMINATION TARGET DATA: PRESSURE DURING SAMPLE ASPIRATION WHERE REAGENT A (LOW VISCOSITY, SMALL FLUID VOLUME) IS HELD | ←→ | DETERMINATION REFERENCE DATA 1 |
| --- | --- | --- |

DETERMINATION TARGET DATA: PRESSURE DURING SAMPLE ASPIRATION WHERE REAGENT A (LOW VISCOSITY, SMALL FLUID VOLUME) IS HELD

DETERMINATION TARGET DATA: PRESSURE DURING SAMPLE ASPIRATION WHERE REAGENT B (LOW VISCOSITY, MEDIUM FLUID VOLUME) IS HELD

DETERMINATION TARGET DATA: PRESSURE DURING SAMPLE ASPIRATION WHERE REAGENT D (MEDIUM VISCOSITY, SMALL FLUID VOLUME) IS HELD

DETERMINATION TARGET DATA: PRESSURE DURING SAMPLE ASPIRATION WHERE REAGENT E (MEDIUM VISCOSITY, MEDIUM FLUID VOLUME) IS HELD

**DETERMINATION REFERENCE DATA 1**

PRESSURE DATA GROUP DURING SAMPLE ASPIRATION WHERE REAGENT (LOW VISCOSITY, SMALL FLUID VOLUME) IS HELD

+ INTEGRATION

PRESSURE DATA GROUP DURING SAMPLE ASPIRATION WHERE REAGENT (MEDIUM VISCOSITY, MEDIUM FLUID VOLUME) IS HELD

THRESHOLD OF STATISTICAL DISTANCE: T1

DETERMINATION TARGET DATA: PRESSURE DURING SAMPLE ASPIRATION WHERE REAGENT C (LOW VISCOSITY, LARGE FLUID VOLUME) IS HELD

DETERMINATION TARGET DATA: PRESSURE DURING SAMPLE ASPIRATION WHERE REAGENT F (MEDIUM VISCOSITY, LARGE FLUID VOLUME) IS HELD

**DETERMINATION REFERENCE DATA 2**

PRESSURE DATA GROUP DURING SAMPLE ASPIRATION WHERE REAGENT (LOW VISCOSITY, MEDIUM FLUID VOLUME) IS HELD

+ INTEGRATION

PRESSURE DATA GROUP DURING SAMPLE ASPIRATION WHERE REAGENT (MEDIUM VISCOSITY, LARGE FLUID VOLUME) IS HELD

THRESHOLD OF STATISTICAL DISTANCE: T2

DETERMINATION TARGET DATA: PRESSURE DURING SAMPLE ASPIRATION WHERE REAGENT G (HIGH VISCOSITY, SMALL FLUID VOLUME) IS HELD

DETERMINATION TARGET DATA: PRESSURE DURING SAMPLE ASPIRATION WHERE REAGENT H (HIGH VISCOSITY, MEDIUM FLUID VOLUME) IS HELD

**DETERMINATION REFERENCE DATA 3**

PRESSURE DATA GROUP DURING SAMPLE ASPIRATION WHERE REAGENT (MEDIUM VISCOSITY, SMALL FLUID VOLUME) IS HELD

+ INTEGRATION

PRESSURE DATA GROUP DURING SAMPLE ASPIRATION WHERE REAGENT (HIGH VISCOSITY, MEDIUM FLUID VOLUME) IS HELD

THRESHOLD OF STATISTICAL DISTANCE: T3

DETERMINATION TARGET DATA: PRESSURE DURING SAMPLE ASPIRATION WHERE REAGENT I (HIGH VISCOSITY, LARGE FLUID VOLUME) IS HELD

**DETERMINATION REFERENCE DATA 4**

PRESSURE DATA GROUP DURING SAMPLE ASPIRATION WHERE REAGENT (MEDIUM VISCOSITY, MEDIUM FLUID VOLUME) IS HELD

+ INTEGRATION

PRESSURE DATA GROUP DURING SAMPLE ASPIRATION WHERE REAGENT (HIGH VISCOSITY, LARGE FLUID VOLUME) IS HELD

THRESHOLD OF STATISTICAL DISTANCE: T4

**EP 4 354 147 A1**

<table>
<tr><td colspan="2" style="text-align:center">INTERNATIONAL SEARCH REPORT</td><td colspan="2">International application No.<br><br>**PCT/JP2022/018029**</td></tr>
</table>

**A.  CLASSIFICATION OF SUBJECT MATTER**

*G01N 35/00*(2006.01)i; *G01N 35/10*(2006.01)i
FI:   G01N35/00 F; G01N35/10 A

According to International Patent Classification (IPC) or to both national classification and IPC

**B.  FIELDS SEARCHED**

Minimum documentation searched (classification system followed by classification symbols)

G01N35/00; G01N35/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 57-42856 A (TOKYO SHIBAURA DENKI KK) 10 March 1982 (1982-03-10)<br>     entire text, all drawings | 1-11 |
| A | JP 2014-149187 A (HITACHI HIGH-TECHNOLOGIES CORP.) 21 August 2014 (2014-08-21)<br>     entire text, all drawings | 1-11 |
| A | JP 2006-343243 A (OLYMPUS CORP.) 21 December 2006 (2006-12-21)<br>     entire text, all drawings | 1-11 |
| A | JP 2014-21022 A (HITACHI HIGH-TECHNOLOGIES CORP.) 03 February 2014 (2014-02-03)<br>     entire text, all drawings | 1-11 |

☐ Further documents are listed in the continuation of Box C.       ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/018029**

| Patent document cited in search report | | | Publication date (day/month/year) | Patent family member(s) | | | Publication date (day/month/year) |
|---|---|---|---|---|---|---|---|
| JP | 57-42856 | A | 10 March 1982 | (Family: none) | | | |
| JP | 2014-149187 | A | 21 August 2014 | US | 2015/0362514 | A1 | |
| | | | | entire text, all drawings | | | |
| JP | 2006-343243 | A | 21 December 2006 | US | 2008/0236301 | A1 | |
| | | | | entire text, all drawings | | | |
| JP | 2014-21022 | A | 03 February 2014 | US | 2015/0323557 | A1 | |
| | | | | entire text, all drawings | | | |

Form PCT/ISA/210 (patent family annex) (January 2015)

**EP 4 354 147 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008224691 A
- JP 2019124529 A